# EUROPEAN PATENT SPECIFICATION

(11) **EP 1 746 897 B1**
(45) Date of publication and mention of the grant of the patent: **01.06.2011**
(21) Application number: 04719018.6
(22) Date of filing: 10.03.2004
(51) Int. Cl.: A23B 4/03, A23B 4/16, A23L 1/318, A23L 1/31, A23L 3/3418, A23L 3/40

(54) **ACCELERATED METHOD FOR DRYING AND MATURING SLICED FOOD PRODUCTS**
BESCHLEUNIGTES VERFAHREN FÜR DIE TROCKNUNG UND REIFUNG VON AUFGESCHNITTENEN NAHRUNGSMITTELN
PROCEDE ACCELERE DE SECHAGE ET DE MATURATION DE PRODUITS ALIMENTAIRES EN TRANCHES

(43) Date of publication of application: 31.01.2007
(73) Proprietor: Institut de Recerca i Tecnologia Agroalimentaries, 08007 Barcelona (ES)
(72) Inventor: COMAPOSADA BERINGUES, Josep, E-08517 Sagas (ES); ARNAU ARBOIX, Jacint, E-17005 Girona (ES); GOU BOTO, Pere, E-17257 Torroella de Montgri (ES); MONFORT BOLIVAR, Josep Maria, E-17111 Vullpellac (ES)
(74) Representative: Ponti Sales, Adelaida
(86) International application number: PCT/IB2004/000661
(87) International publication number: WO 2005/092109

(56) References cited:
- EP-A- 0 677 250
- GB-A- 848 014
- US-A- 2 974 047
- US-A- 3 067 043
- US-A- 3 230 860
- US-A- 3 971 854
- US-A- 4 265 918
- PATENT ABSTRACTS OF JAPAN vol. 2000, no. 01, 31 January 2000 (2000-01-31) -& JP 11 266783 A (NOMACHI MITSUNORI), 5 October 1999 (1999-10-05)
- PATENT ABSTRACTS OF JAPAN vol. 018, no. 301 (C-1210), 9 June 1994 (1994-06-09) -& JP 06 062801 A (SANKAI:KK), 8 March 1994 (1994-03-08)

## Description

The present invention refers to a method for drying and maturing sliced food products.

### BACKGROUND OF THE INVENTION

The traditional method for elaborating certain food products, comprises a final stage of drying and maturing, in which takes place a reduction in the water content of the product, as well as several physical, chemical and microbiological changes that determine the organoleptic characteristics of the final product.

The traditional methods for drying and maturing are carried out by placing the whole pieces of the food product in storage rooms where the temperature and moisture are controlled. While this method is applied, it is of vital importance to ensure the microbiological stability of that product so that it does not degradate and it develops the organoleptic properties that will characterize it.

The traditional method for drying and maturing food products has the inconvenience that it takes a very long time. In the particular case of cured raw meat products, the time required for this process can vary from one to six weeks, depending on the caliber and characteristics of the product. In the case of salted meat products as cured ham and shoulder, the time required varies from three to twenty four months or even more, also depending on the characteristics of the product.

There are methods for drying food products, particularly for meat food products, that comprise the stage of slicing the food product into slices of a determined thickness, and the stage of drying those slices by means of applying a pressure lower than the atmospheric pressure and with a simultaneous heating, until that sliced food product is partially dehydrated for a later heat treatment before its consumption.

Such drying methods reduce the losses in the performance of the product and the cooking time. However, they are not designed to be applied to the process of elaborating cured raw meat products, which comprises a stage of maturing after the stage of drying.

There are also several methods for drying and maturing of whole pieces of cured raw meat products, such as cured ham, that comprise the stage of applying pressures lower than atmospheric pressure and heating, until the meat product is microbiologically stable. These methods reduce the time required for drying and maturing by a 50 to 70 per cent. However, they have the inconvenience that since they are developed in full pieces of meat, they generate gradients of moisture in the piece. Also, the working pressure are over 89000 Pa; (890 mbar), so the time required for the elaboration is still very long.

Other processes for drying and maturing of whole pieces of ham, make use of cycles of pressures of 13 to 50 mbar and a microwave heating, which is carried out in an equipment designed for this. These methods, despite they reduce the time required for the process, still have the inconvenience that since they use whole pieces of meat, they generate gradients of moisture in the piece that affect the final quality of the product obtained.

US 3067043 discloses a process of making a dehydrated flake meat product which has to be rehydrated before eating and which after that rehydratation has substantially the appearance, texture and flavour of a fresh flake meat dish. The process comprises the steps of slicing raw meat and freeze-dehydrating said meat at 0,75 mm - 1,5 mm of Hg until a final moisture content not exceeding about 2,5%. The dehydrated product is finally packed, preferably in the absence of atmospheric oxygen.

US3971854 discloses a method of producing freezedried, cooked beefsteak which is tender when rehydrated and which rehydrates rapidly. The cited method comprises the steps of mechanical tenderizing of beef muscle, injecting into the muscle of an aqueous solution, slicing said beef muscle into steaks, cooking the steaks, preferably by grilling at 176°C, frozing the steaks, freeze-vacuum-dehydrating the steaks to a moisture content less than 2,0 % and finally hermetically sealing the steaks under vacuum.

Patent Abstracts of Japan, JP 11266783 A, discloses a process in which tuna fish is formed into a rectangular strip-like body T, dehydrated under vacuum, filled with some stuffing, vacuum packed and frozen to be able to keep the freshness and colour tone of the fish meat slice.

US 2974047 discloses a method of producing cured packed slices of pig meat which comprises the steps of slicing pig meat into slices, dipping the slices in brine, draining the slices, sealing them in an air-impermeable container in the substantial absence of free oxygen, and allowing the slices to mature in the container for a few hours.

### DESCRIPTION OF THE INVENTION

The objective of the present invention is to solve the abovementioned inconveniences, developing a process of vacuum drying of the food product previously sliced, followed by the maturing of the product, carried

out in a modified atmosphere at a controlled temperature, achieving with this method a considerable acceleration in the process of drying and maturing.

According to this objective, the method for drying and maturing of food products of the present invention is characterized in that it comprises the stages described in claim 1.

This process allows to reduce the time elapsed in the stages of drying and maturing food products, in quantities from several weeks or months to several days, which results in a reduction in the costs of energy and elaboration of this products. Also, the moisture in the food product is homogeneously distributed in the slice, achieving an homogeneous texture and assuring the microbiologic stability in any given place of the product. The developing of oxidation and inadequate mold growth is also avoided.

Preferably, the slices have a thickness of 0.2 to 20 mm.

Advantageously, before the stage of slicing, the stage of freezing of the product is carried out.

The freezing of the product makes the mechanization of the slicing easier, being the slicing more regular and fast.

Due to this vacuum pressures, the process of partial drying is fast.

This low content of oxygen in the atmosphere surrounding the food product reduces the multiplication of aerobic microorganisms which can alter this products, and helps to achieve, in a short period of time, the uniformization of the texture and the aromatic development of the food product.

In an embodiment of the method, the stage of applying an environment with a modified atmosphere to the product is carried out at the moment of packaging the product.

Preferably, the packaging is carried out in a vacuumed environment.

The vacuum-packaging, with the existent equipments in the market, guarantees the reduction of oxygen content in the atmosphere that surrounds the product.

Alternatively, before or after the maturing of such food product, preferably meat products with injected flavored brine or not, it takes place the stage of applying a reduction/elimination treatment of the flora to improve the microbiological stability of the product.

By maintaining the sliced product temperature in those values, the speed of evaporation is improved and the loss of heat involved in the same process of evaporation is compensated.

Alternatively, before the maturing of such a food product, preferably the meat food products, a high isostatic pressure treatment is carried out, to accelerate the maturing of the product.

The use of high pressures, up to 900 MPa, completes the method of the invention as it allows, on one side, the reduction/elimination of the flora to improve the microbiologic stability of the product, and on the other side, accelerating the process of development of aromas, flavors and texture, due to the selective activation of certain enzymes, which involves a faster maturing and the minimization of alterations or faults in the final product related to a high enzymatic activity (loss of color, rancidifications, etc.).

### DESCRIPTION OF PREFERRED EMBODIMENTS

For a better understanding of the invention, four examples of embodiments are explained as follows.

### Example 1: Accelerated process for drying and maturing sliced ham.

The accelerated process for drying and maturing begins when the stage of resting or post-salting of the process of elaborating the cured ham ends. In first place, the whole piece of ham is frozen, after being boned, to facilitate the slicing. The thickness of the slice varies from 1.5 to 2mm. After that, it takes place the partial drying of those slices by applying a pressure of 500 to 1000 Pa; (5 to 10 mbar) and maintaining the product in an approximate temperature of 20°C. The time of drying will be the necessary to achieve the microbiological stability of such product, that is, when a reduction in a 25% approximately of the slice weight before the drying is obtained. After the partial drying, the ham slices are vacuum-packed and maintained in a temperature between 3°C and 20°C for a period of 15 days. After that period of time, the product has developed several flavor and aroma qualities that characterize the cured ham.

### Example 2: Accelerated process for drying and manuring sliced sausage or salami or hard pork sausage

The accelerated process for drying and maturing begins at the end of the fermentation periode of the elaboration process of cured meat products, such as sausage, salami, or hard pork sausage. Firstly, the meat product is frozen to facilitate the slicing. The slice thickness varies from 1.5 to 2mm. After that, it takes place the partial drying of those slices by applying a pressure of 500 to 1000 Pa; (5 to 10 mbar) and by maintaining the product in an approximate temperature of 20°C. The time of drying will be the necessary to achieve the microbiological stability of the product, that is, when a reduction in the slice weight in a 30% approximately of the weight before the drying is achieved. After the partial drying, the slices are vacuum-packed and maintained in a temperature of 4°C for 7 days. After that period of time, the product has developed the characteristic flavor and aroma of the cured meat products.

### Example 3: Accelerated process for drying and maturing sliced marinated-injected products with a reduced maturity period.

The accelerated process for drying and maturing is carried out when the massage stage of the elaboration process of marinated-injected products ends. Firstly, the piece of injected meat is frozen to make the slicing easier. The thickness of the slice will be of 2 to 2.5 mm. After that, it takes place the partial drying of the those slices by applying pressures that vary of 500 to 1000 Pa; (5 to 10 mbar) and by maintaining the product in an approximate temperature of 20°C. The drying time is necessary to obtain the microbiological stability of the products so that it is possible to continue with a reduced maturity stage, that is, when a reduction in the slice weight in a 35% approximately of the weight before the drying is achieved. After the partial drying, the marinated-injected product slices are vacuum-packed and they are maintained in a temperature of 4°C for a period of 15 days approximately. After that period of time, the vacuum-packed product can also have a treatment for reducing or eliminating the microbial flora in order to achieve a better stability of the matured product.

### Example 4: Process for Drying and maturing food products with re-structuring agents.

The preparation of food products with re-structuring agents is carried out with the following stages:
a) Mixing with one or several re-structuring agents, among which we can find:
   1. Action of acids, either for the hydrolysis of lactones (i.e. Gluconodeltalactone), or the direct action of acids like lactic acid.
   2. Action of transglutaminase.
   3. Action of fibrinogen in the presence of thrombin.
   4. Action of alginate with calcium.
   5. Polyphosphates.
   6. Proteins (gluten, caseinate, soya).
b) Filling with high vacuum machines to facilitate the ulterior interaction of the proteins.
c) Treatment, if necessary, with a pressure higher than atmospheric pressure, up to 900 MPa, to increase the binding.

The accelerated process of drying and maturing is initiated when the stage of preparation of products developed with re-structuring agents has finished. In first place, the product is frozen to facilitate the slicing. The thickness of the slice is from 1 to 2 mm. After that, the partial drying of such slices is carried out applying pressures from 10 to 1000 Pa; (0.1 to 10 mbar) and keeping the product in a temperature of approximately 20 °C. The time of drying will be the necessary until achieving the desired degree of moisture, which usually goes from 10 to 40% of reduction of weight before the drying process take place. After finishing the drying process, the slices are shaped when necessary and packed, either in a vacuum or protected atmosphere. The packed product is kept at temperatures from 3° to 20°, during a period of time lower than 48 hours. After this period of time the product has developed the characteristic flavor and aroma of the cured food product. An alternative treatment for the reduction/elimination of microbial flora can be applied to the product to stabilize it.

It is important to highlight that the application of the process of the invention to products developed with re-structuring agents allows the stage of maturing to be carried out in a short period of time, and even being unnecessary such a stage.

The process of preparation of meat food products developed with re-structuring agents allows to eliminate the stage of fermentation from the method for the elaboration of cured meat products, as well as adjusting the acidity and the content of salt of the product. The elimination of the stage of fermentation can involve a reduction in the time of up to three days in the elaboration of cured meat products. Due to the method of the invention, we must add the reduction of time during the stages of drying and maturing of the food product to the reduction of time in the stage of fermentation. The result is a method for the elaboration of meat food products with a final result equivalent to the traditional method of fermented products, which allow to reduce the costs of investment in infrastructure and processing for such products.

Despite we have described and represented four specific embodiments of the present invention, the person skilled in the art can introduce variants and modifications in this field, or substitute the details for others which are equivalent, without departing from the scope of protection defined by the enclosed claims.

## Claims

1. Method for drying and maturing raw meat products , involving the stage of slicing that product in slices **characterized in that** after the stage of slicing, it includes the following stages :
a) Partially drying those slices with a pressure lower than 7500 Pa (75 mbar), and with a product temperature of -2°C to 40°C, until a reduction of weight of 10% to 40% of the weight of the slice before the partial drying is achieved ,
b) Applying a modified atmosphere to the product , with a content of oxygen not higher than 1% ,
c) Maturing that sliced food product **in that** modified atmosphere and in a temperature of 0°C to 40°C.

2. Method according to claim 1, **characterized in that** in stage a), the slices have a thickness between 0.2 and 20 mm.

3. Method according to claim 1, **characterized in that**, before stage a), the product is frozen.

4. Method according to claim 1, **characterized in that** stage c) is carried out when packaging the product.

5. Method according to claim 4, **characterized in that** the packaging is made in a vacuum environment.

6. Method according to claim 1, **characterized in that**, before or after stage c), it takes place a treatment for the reduction or elimination of the flora to improve the microbiological stability of the product.

7. Method according to claim 1, **characterized in that**, before stage c), an isostatic high pressure treatment is carried out to accelerate the maturing of the product.

## Patentansprüche

1. Verfahren zum Trockenen und Reifen von rohen Fleischprodukten, einschließlich des Schrittes, diese Produkte in Scheiben zu schneiden, **dadurch gekennzeichnet, dass** das Verfahren nach dem Schritt des Schneidens die nachfolgenden Stufen einschließt:
a) teilweises Trocknen dieser Scheiben mit einem Druck der unter 7.500 Pa (75 mbar) liegt und mit einer Produkttemperatur von -2°C bis 40°C, bis eine Verringerung des Gewichts um 10 Gew.-% bis 40 Gew.-% der Scheibe vor dem teilweisen Trocknen erhalten wird,
b) das Produkt wird einer modifizierten Atmosphäre mit einem Sauerstoffgehalt von nicht über 1 % ausgesetzt,
c) Reifen des geschnittenen Nahrungsproduktes in dieser modifizierten Atmosphäre und bei einer Temperatur von 0°C bis 40°C.

2. Verfahren nach Anspruch 1, **dadurch gekennzeichnet, dass** im Schritt a) die Scheiben eine Dicke von 0,2 bis 20 mm aufweisen.

3. Verfahren nach Anspruch 1, **dadurch gekennzeichnet, dass** vor dem Schritt a) das Produkt gefroren wird.

4. Verfahren nach Anspruch 1, **dadurch gekennzeichnet, dass** der Schritt c) beim Verpacken des Produktes durchgeführt wird.

5. Verfahren nach Anspruch 4, **dadurch gekennzeichnet, dass** die Verpackung in einer Vakuumumgebung durchgeführt wird.

6. Verfahren nach Anspruch 1, **dadurch gekennzeichnet, dass** vor oder nach dem Schritt c) eine Behandlung zur Reduktion oder Eliminierung der Flora stattfindet, um die mikrobiologische Stabilität des Produktes zu verbessern.

7. Verfahren nach Anspruch 1, **dadurch gekennzeichnet, dass** vor dem Schritt c), eine isostatische Hochdruckbehandlung durchgeführt wird, um die Reifung des Produktes zu beschleunigen.

## Revendications

1. Procédé de séchage et de maturation de produits camés bruts, comprenant l'étape de découpe de ce produit en tranches, **caractérisé en ce que**, après l'étape de découpe en tranches, il comprend les étapes consistant à :
a) faire sécher en partie ces tranches à une pression inférieure à 7500 Pa (75 mbars) et à une température des produits de -2 °C à 40 °C jusqu'à obtenir une réduction de poids de 10 % à 40 % en poids de la tranche avant que le séchage partiel ne soit atteint,
b) appliquer une atmosphère modifiée au produit, avec une teneur en oxygène ne dépassant pas 1 %,
c) amener à maturation ce produit alimentaire découpé en tranches dans cette atmosphère modifiée et à une température de 0 °C à 40 °C.

2. Procédé selon la revendication 1, **caractérisé en ce que**, à l'étape a), les tranches ont une épaisseur de 0,2 à 20 mm.

3. Procédé selon la revendication 1, **caractérisé en ce que**, avant l'étape a), le produit est congelé.

4. Procédé selon la revendication 1, **caractérisé en ce que** l'étape c) est effectuée lors de l'emballage du produit.

5. Procédé selon la revendication 4, **caractérisé en ce que** l'emballage est effectué dans un environnement sous vide.

6. Procédé selon la revendication 1, **caractérisé en ce que**, avant ou après l'étape c), on procède à un traitement pour réduire ou éliminer la flore afin d'améliorer la stabilité microbiologique du produit.

7. Procédé selon la revendication 1, **caractérisé en ce que**, avant l'étape c), on effectue un traitement sous pression isostatique élevée afin d'accélérer la maturation du produit.
